# EUROPÄISCHE PATENTSCHRIFT

(11) **EP 3 120 075 B1**
(45) Veröffentlichungstag und Bekanntmachung des Hinweises auf die Patenterteilung: **15.05.2019**
(21) Anmeldenummer: 15716720.6
(22) Anmeldetag: 11.03.2015
(51) Int. Cl.: F23D 3/40, F23D 5/12

(54) **VERDAMPFERBRENNERANORDNUNG FÜR EIN MOBILES, MIT FLÜSSIGEM BRENNSTOFF BETRIEBENES HEIZGERÄT**
EVAPORATION BURNER ARRANGEMENT FOR A MOBILE, LIQUID FUEL HEATING DEVICE
MONTAGE DE BRÛLEUR À ÉVAPORATEUR POUR, UN APPAREIL MOBILE DE CHAUFFAGE À COMBUSTIBLE LIQUIDE.

(30) Priorität: 20.03.2014 DE 102014103813
(43) Veröffentlichungstag der Anmeldung: 25.01.2017
(73) Patentinhaber: Webasto SE, 82131 Stockdorf (DE)
(72) Erfinder: ILCHENKO, Volodymyr, 82131 Stockdorf (DE); ZOSKE, Martin, 82131 Stockdorf (DE); PÖHNER, Michael, 82131 Stockdorf (DE); DELL, Vitali, 82131 Stockdorf (DE); MÖSL, Klaus, 82131 Stockdorf (DE); SOMMERER, Stefan, 82131 Stockdorf (DE); KERSCHER, Thomas, 82131 Stockdorf (DE)
(74) Vertreter: Ciesla, Bettina
(86) Internationale Anmeldenummer: PCT/DE2015/100100
(87) Internationale Veröffentlichungsnummer: WO 2015/139684

(56) Entgegenhaltungen:
- EP-A2- 1 860 379
- DE-A1- 10 151 617
- DE-A1- 19 529 994
- DE-B4- 4 447 987

## Beschreibung

Die vorliegende Erfindung betrifft eine Verdampferbrenneranordnung für ein mobiles, mit flüssigem Brennstoff betriebenes Heizgerät und ein mobiles, mit flüssigem Brennstoff betriebenes Heizgerät mit einer solchen Verdampferbrenneranordnung.

In mobilen, mit flüssigem Brennstoff betriebenen Heizgeräten kommen häufig Verdampferbrenner zum Einsatz, bei denen der flüssige Brennstoff verdampft wird, der verdampfte Brennstoff mit zugeführter Brennluft zu einem Brennstoff-Luft-Gemisch vermischt und anschließend unter Freisetzung von Wärme umgesetzt wird.

Unter einem "mobilen Heizgerät" wird im vorliegenden Kontext ein Heizgerät verstanden, das für den Einsatz in mobilen Anwendungen ausgelegt und dementsprechend angepasst ist. Dies bedeutet insbesondere, dass es transportabel ist (ggf. in einem Fahrzeug fest eingebaut oder lediglich für den Transport darin untergebracht) und nicht ausschließlich für einen dauerhaften, stationären Einsatz, wie es beispielsweise bei der Beheizung eines Gebäudes der Fall ist, ausgelegt ist. Dabei kann das mobile Heizgerät auch fest in einem Fahrzeug (Landfahrzeug, Schiff, etc.), insbesondere in einem Landfahrzeug, installiert sein. Insbesondere kann es zur Beheizung eines Fahrzeug-Innenraums, wie beispielsweise eines Land-, Wasser- oder Luftfahrzeugs, sowie eines teiloffenen Raumes, wie er beispielsweise auf Schiffen, insbesondere Yachten, aufzufinden ist, ausgelegt sein. Das mobile Heizgerät kann auch vorübergehend stationär eingesetzt werden, wie beispielsweise in großen Zelten, Containern (zum Beispiel Baucontainern), etc. Insbesondere kann das mobile Heizgerät als Stand- oder Zuheizer für ein Landfahrzeug, wie beispielsweise für einen Wohnwagen, ein Wohnmobil, einen Bus, einen Pkw, etc., ausgelegt sein.

Im Hinblick auf Umweltgesichtspunkte und die diesbezügliche Gesetzgebung in vielen Ländern wird es immer wichtiger, die Abgasemissionen von mobilen Heizgeräten zu minimieren. Insbesondere bei Verdampferbrennern für mobile Heizgeräte besteht dabei die Schwierigkeit, dass ein Betrieb unter unterschiedlichen äußeren Randbedingungen und in verschiedenen Heizleistungsstufen jeweils möglichst effizient und mit geringen Abgasemissionen erfolgen soll.

DE 195 29 994 A1 beschreibt einen Verdampferbrenner mit Brennkammer für ein Heizgerät mit einer Umfangs-Begrenzungswand, einer Stirn-Begrenzungswand und einem koaxial in die Brennkammer hineinragenden Luftzuführungsstutzen mit radialen Luftaustritten durch die Stutzenwand.

DE 44 47 987 B4 beschreibt eine Brennkammer eines Brenners für ein Fahrzeugheizgerät, die eine Stirn-Begrenzungswand, eine Umfangs-Begrenzungswand, einen Stutzen zur Unterbringung einer Glühkerze und einen Stutzen zur Zuführung von Verbrennungsluft aufweist.

EP 1 860 379 A2 beschreibt eine Verdampferbaugruppe für ein Fahrzeugheizgerät mit einer eine Verdampfungskammer umschließenden Wandungsanordnung mit einer Umfangswandung und einer Bodenwandung, wobei an der Bodenwandung ein sich in Richtung einer Wandungslängsachse erstreckender Lufteinleitansatz mit einer Mehrzahl von Lufteinleitöffnungen vorgesehen ist.

Es ist Aufgabe der vorliegenden Erfindung, eine verbesserte Verdampferbrenneranordnung und ein verbessertes mobiles, mit flüssigem Brennstoff betriebenes Heizgerät mit einer Verdampferbrenneranordnung bereitzustellen, die eine stabile Umsetzung eines Brennstoff-Luft-Gemischs mit verringerten Emissionen ermöglichen.

Die Aufgabe wird durch eine Verdampferbrenneranordnung für ein mobiles, mit flüssigem Brennstoff betriebenes Heizgerät nach Anspruch 1 gelöst. Vorteilhafte Weiterbildungen sind in den abhängigen Ansprüchen angegeben.

Unter einem Gemischaufbereitungsbereich ist ein Bereich der Verdampferbrenneranordnung zu verstehen, in dem im normalen Heizbetrieb der Verdampferbrenneranordnung eine Durchmischung von verdampftem Brennstoff mit Brennluft erfolgt, aber keine Umsetzung des Brennstoff-Luft-Gemischs unter Freisetzung von Wärme erfolgt, insbesondere keine Flamme ausgebildet ist. In dem Gemischaufbereitungsbereich kann eine vorteilhafte Aufbereitung des Brennstoff-Luft-Gemisches vor dessen Umsetzung in dem Umsetzungsbereich erfolgen. Unter einem Umsetzungsbereich ist dabei der Bereich der Verdampferbrenneranordnung zu verstehen, in dem im Betrieb der Verdampferbrenneranordnung eine Umsetzung des Brennstoff-Luft-Gemischs unter Freisetzung von Wärme erfolgt, was insbesondere in einer flammenden Verbrennung erfolgen kann. Es ist jedoch z.B. auch eine Umsetzung in einem flammlosen katalytischen Prozess möglich.

Durch die räumliche und funktionale Trennung des Gemischaufbereitungsbereichs und des Umsetzungsbereichs wird erreicht, dass für den Umsetzungsprozess in dem Umsetzungsbereich ein gut durchmischtes Brennstoff-Luft-Gemisch bereitgestellt wird, das eine schadstoffarme Umsetzung ermöglicht. Der Gemischaufbereitungsbereich und der Umsetzungsbereich können dabei insbesondere in einer axialen Richtung bezüglich einer Längsachse der Verdampferbrenneranordnung hintereinander angeordnet sein. Über den Wärmeleitkörper kann Wärme von dem Umsetzungsprozess in dem Umsetzungsbereich gezielt zur Unterstützung des Verdampfungsprozesses in dem Gemischaufbereitungsbereich zurückgeführt werden, wodurch eine zuverlässige Ausbildung eines homogenen Brennstoff-Luft-Gemischs in dem Gemischaufbereitungsbereich ermöglicht ist. Da die Wärmerückführung im Wesentlichen über den Wärmeleitkörper erfolgt, kann die Menge der rückgeführten Wärme in einfacher Weise über die Dimensionierung des Wärmeleitkörpers vorgegeben werden. Der Wärmeleitkörper kann dabei bevorzugt als ein Axialkörper ausgebildet sein, der sich im Wesentlichen parallel zu einer Längsachse der Brennkammeranordnung erstreckt. Bevorzugt kann sich er Wärmeleitkörper bis in den Umsetzungsbereich erstrecken.

Gemäß einer Weiterbildung erstreckt sich der Wärmeleitkörper stabförmig entlang einer Längsachse des Gemischaufbereitungsbereichs. In diesem Fall kann der Wärmeleitkörper zusätzlich noch derart ausgebildet werden, dass er die Strömungsführung für das Brennstoff-Luft-Gemisch positiv beeinflusst.

Der Gemischaufbereitungsbereich weist einen sich in Richtung des Umsetzungsbereichs verjüngenden Verjüngungsabschnitt auf. Somit kann die Strömungsgeschwindigkeit in dem Gemischaufbereitungsbereich zuverlässig so stark erhöht werden, dass ein Rückschlagen einer Flamme aus dem Umsetzungsbereich in den Gemischaufbereitungsbereich verhindert ist. Der Verjüngungsabschnitt kann dabei insbesondere sich konisch verjüngend ausgebildet sein, um eine besonders einfache Herstellung zu ermöglichen und eine besonders vorteilhafte Strömungsführung zu erzielen. Es ist jedoch auch eine andere Formgebung möglich.

An einem Übergang von dem Gemischaufbereitungsbereich zu dem Umsetzungsbereich ist eine abrupte Querschnittserweiterung ausgebildet. Somit wird eine besonders vorteilhafte Flammverankerung in dem Umsetzungsbereich ermöglicht, bei der sich in einem Bereich an der Längsachse des Umsetzungsbereichs ein Rezirkulationsbereich ausbildet, in dem die Gase entgegen einer Hauptströmungsrichtung in Richtung des Gemischaufbereitungsbereichs strömen. Diese vorteilhafte Wirkung kann dabei insbesondere erzielt werden, wenn die Brennluft mit einem starken Drall dem Gemischaufbereitungsbereich zugeführt wird und dieser einen Verjüngungsabschnitt aufweist, in dem sich der für das strömende Brennstoff-Luft-Gemisch zur Verfügung stehende Querschnitt in Richtung zu dem Umsetzungsbereich verjüngt. Ferner wird in diesem Fall eine zuverlässige konstruktive und funktionale Trennung von Gemischaufbereitungsbereich und Umsetzungsbereich bereitgestellt.

Gemäß einer Weiterbildung weist die Brennluftzuführung einen Drallkörper auf, mit dem der zugeführten Brennluft eine Drallströmung aufgeprägt wird. In diesem Fall kann eine Verankerung der Flamme in dem Umsetzungsbereich besonders zuverlässig erzielt werden. Ferner wird in diesem Fall erreicht, dass die zugeführte Brennluft zuverlässig über die Brennstoffverdampfungsoberfläche geleitet wird, sodass die Verdampfung des flüssigen Brennstoffs zusätzlich gefördert und die Aufbereitung des Brennstoff-Luft-Gemischs verbessert wird. Ferner wird in diesem Fall die Brennstoffverteilung an der Brennstoffverdampfungsoberfläche verbessert.

Gemäß einer Weiterbildung ist eine Seitenwand des Gemischaufbereitungsbereichs gegenüber dem Umsetzungsbereich wärmeisoliert. In diesem Fall wird sichergestellt, dass die Seitenwand des Gemischaufbereitungsbereichs auf einem relativ niedrigen Temperaturniveau gehalten wird, sodass eine Neigung zur Bildung von Ablagerungen unterdrückt wird. Ferner ist in diesem Fall erreicht, dass die Wärmerückführung aus dem Umsetzungsbereich zur Unterstützung des Verdampfungsprozesses in dem Gemischaufbereitungsbereich wohldefiniert im Wesentlichen über den Wärmeleitkörper erfolgt, sodass sich das Ausmaß der Wärmerückführung sehr gezielt über die Dimensionierung des Wärmeleitkörpers einstellen lässt.

Gemäß einer Weiterbildung ist die Brennstoffverdampfungsoberfläche durch eine freiliegende Seitenwand des Gemischaufbereitungsbereichs gebildet. In diesem Zusammenhang bedeutet freiliegend, dass die Seitenwand nicht durch einen zusätzlichen Verdampferkörper aus einem porösen, saugfähigen Material bedeckt ist, sondern die Oberfläche der Seitenwand selbst die Brennstoffverdampfungsoberfläche bereitstellt. In diesem Fall kann eine Bildung von Ablagerungen insbesondere dann sehr zuverlässig unterdrückt werden, wenn die Seitenwand des Gemischaufbereitungsbereichs thermisch von dem Umsetzungsbereich isoliert ist und die Wärmerückführung aus dem Umsetzungsbereich in den Gemischaufbereitungsbereich hauptsächlich über den Wärmeleitkörper erfolgt. Dabei kann über Wärmestrahlung von dem Wärmeleitkörper zu der Brennstoffverdampfungsoberfläche gezielt die Brennstoffverdampfung unterstützt werden und gleichzeitig das Temperaturniveau der die Brennstoffverdampfungsoberfläche bereitstellenden Seitenwand relativ niedrig gehalten werden, sodass eine besonders rückstandsfreie Verdampfung erfolgt.

Gemäß einer Weiterbildung ist die Brennstoffverdampfungsoberfläche durch die freiliegende Seitenwand im Bereich des Verjüngungsabschnitts gebildet. In diesem Fall kann zuverlässig sichergestellt werden, dass sich ein Brennstofffilm über im Wesentlichen die gesamte Brennstoffverdampfungsoberfläche verteilt und die zugeführte Brennluft entlang der Brennstoffverdampfungsoberfläche strömt. Insbesondere in Verbindung mit der beschriebenen Zuführung der Brennluft unter einem starken Drall lässt sich somit ein besonders stabiler und schadstoffarmer Verbrennungsprozess realisieren.

Gemäß einer anderen Weiterbildung ist die Brennstoffverdampfungsoberfläche durch einen Verdampferkörper aus einem saugfähigen, porösen Material gebildet. Der Verdampferkörper kann dabei insbesondere ein Metallvlies, ein Metallgewebe und/oder einen metallischen oder keramischen Sinterkörper aufweisen. Der Verdampferkörper aus einem saugfähigen, porösen Material stellt eine große für die Verdampfung zur Verfügung stehende Brennstoffverdampfungsoberfläche bereit und übt zusätzlich auch in gewissem Umfang eine Speicher- und Verteilungsfunktion aus.

Gemäß einer Weiterbildung ist der Verdampferkörper an einer Außenumfangsfläche des Wärmeleitkörpers angeordnet. Bevorzugt kann in diesem Fall der Wärmeleitkörper als ein Axialkörper ausgebildet sein, der sich entlang einer Längsachse des Verdampferbrenners erstreckt. Durch die Anordnung des Verdampferkörpers an einer Außenumfangsfläche des Wärmeleitkörpers wird eine zuverlässige Umströmung der Brennstoffverdampfungsoberfläche mit Brennluft sichergestellt und es kann sehr gezielt Wärme zur Unterstützung des Verdampfungsprozesses über den Wärmeleitkörper zu dem Verdampferkörper zurückgeführt werden.

Gemäß einer Weiterbildung ist an einem dem Umsetzungsbereich zugewandten Ende des Verdampferkörpers eine Abdeckung vorgesehen. In diesem Fall kann ein unkontrolliertes Austreten von Brennstoff an dem stirnseitigen Ende des Verdampferkörpers zuverlässig verhindert werden und die Strömung beim Eintritt in den Umsetzungsbereich kann gezielt eingestellt werden.

Gemäß einer Weiterbildung ist eine Stützluftzufürhung vorgesehen zum Zuführen eines Teils der Brennluft in einem Übergangsabschnitt, über den der Gemischaufbereitungsbereich in den Umsetzungsbereich übergeht. In diesem Fall werden eine zusätzliche Erhöhung der Strömungsgeschwindigkeit an dem Eintritt in den Umsetzungsbereich und eine besonders stabile Gemischaufbereitung erreicht.

Gemäß einer Weiterbildung ist ein Übergangsabschnitt, über den der Gemischaufbereitungsbereich in den Umsetzungsbereich übergeht, mit einer Querschnittsvariation zur Verbesserung des Abströmprofils versehen. In diesem Fall können auch bei ungünstigen äußeren Bedingungen besonders stabile Strömungsverhältnisse aufrechterhalten werden.

Die Aufgabe wird auch durch ein mobiles, mit flüssigem Brennstoff betriebenes Heizgerät mit einer solchen Verdampferbrenneranordnung nach Anspruch 15 gelöst.

Bevorzugt ist das Heizgerät dabei als Fahrzeugheizgerät für eine Standheizung oder Zusatzheizung ausgebildet.

Weitere Vorteile und Weiterbildungen ergeben sich aus der nachfolgenden Beschreibung eines Ausführungsbeispiels unter Bezugnahme auf die beiliegenden Zeichnungen.
- Fig. 1: ist eine schematische Darstellung einer Verdampferbrenneranordnung gemäß einer ersten Ausführungsform.
- Fig. 2: ist eine schematische Darstellung einer Verdampferbrenneranordnung gemäß einer zweiten Ausführungsform.
- Fig. 3: ist eine schematische Darstellung einer Abwandlung der Verdampferbrenneranordnung gemäß der ersten Ausführungsform.
- Fig. 4: a) bis d) sind schematische Darstellungen verschiedener Ausgestaltungen einer Stützluftzuführung zur Verbesserung des Betriebs der Verdampferbrenneranordnung.
- Fig. 5: a) bis e) sind schematische Darstellungen verschiedener Weiterbildungen eines Übergangsabschnittes.
- Fig. 6: a) bis i) sind schematische Darstellungen von Weiterbildungen der in Fig. 3 gezeigten Abwandlung.

### ERSTE AUSFÜHRUNGSFORM

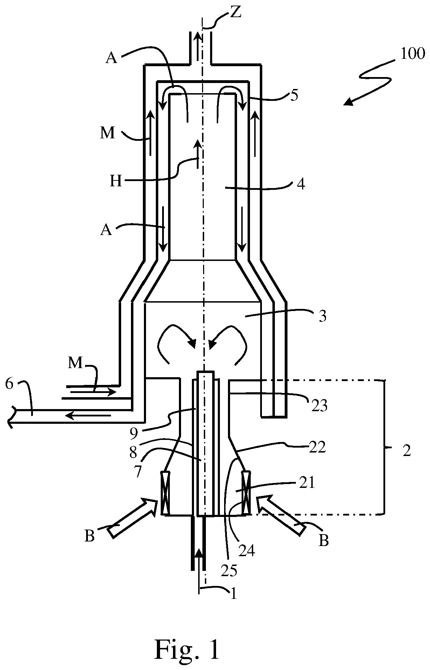

Eine erste Ausführungsform einer Verdampferbrenneranordnung wird im Folgenden unter Bezug auf Fig. 1 beschrieben.

Die Verdampferbrenneranordnung 100 gemäß der ersten Ausführungsform ist für ein mobiles, mit flüssigem Brennstoff betriebenes Heizgerät ausgebildet. Die Verdampferbrenneranordnung 100 ist dabei speziell für ein Fahrzeugheizgerät ausgelegt, insbesondere für eine Standheizung oder Zusatzheizung eines Kraftfahrzeugs.

Die Verdampferbrenneranordnung 100 erstreckt sich entlang einer Längsachse Z. Die Verdampferbrenneranordnung 100 weist einen Gemischaufbereitungsbereich 2 auf, der eine Hauptkammer 21, einen an die Hauptkammer 21 anschließenden Verjüngungsabschnitt 22 und einen an den Verjüngungsabschnitt 22 anschließenden Übergangsabschnitt 23 aufweist. In dem Verjüngungsabschnitt 22 verjüngt sich der Querschnitt des Gemischaufbereitungsbereichs 2 in einer Hauptströmungsrichtung H, die im Wesentlichen parallel zu der Längsachse Z verläuft. Bei dem schematisch dargestellten Ausführungsbeispiel ist beispielhaft eine konische Ausbildung des Verjüngungsabschnitts 22 dargestellt, es sind jedoch auch andere Ausgestaltungen möglich. Der Übergangsabschnitt 23 bildet einen Übergang zu dem sich an den Gemischaufbereitungsbereich 2 anschließenden Umsetzungsbereich 3, der bei der Ausführungsform als eine Brennkammer ausgebildet ist. Der Umsetzungsbereich 3 ist dabei strömungstechnisch dem Gemischaufbereitungsbereich 2 nachgeordnet, wie aus der folgenden Beschreibung noch detaillierter hervorgeht. Der Übergangsabschnitt 23 weist bei der Ausführungsform eine im Wesentlichen zylindrische Form mit einem zumindest überwiegend konstanten Querschnitt auf. Es ist jedoch auch eine davon abweichende Form möglich.

An dem Übergang von dem Übergangsabschnitt 23 des Gemischaufbereitungsbereichs 2 zu dem Umsetzungsbereich 3 ist eine abrupte Querschnittserweiterung ausgebildet. Der für die in dem Verdampferbrenner 100 strömenden Gase zur Verfügung stehende Strömungsquerschnitt weitet sich an dem Übergang von dem Gemischaufbereitungsbereich 2 zu dem Umsetzungsbereich 3 somit abrupt auf, wie in Fig. 1 zu sehen ist.

In dem Umsetzungsbereich 3 findet im Betrieb der Verdampferbrenneranordnung 100 eine Umsetzung eines Brennstoff-Luft-Gemischs in einer flammenden Verbrennung unter Freisetzung von Wärme statt. Die bei dieser Umsetzung entstehenden Verbrennungsabgase A strömen durch ein an den Umsetzungsbereich 3 anschließendes Brennrohr 4 in einen Wärmetauscher 5, in dem zumindest ein Teil der freigesetzten Wärme auf ein zu erwärmendes Medium M übertragen wird. Bei der schematisch dargestellten Ausführungsform ist der Wärmetauscher 5 topfartig ausgebildet und die heißen Verbrennungsabgase A werden am Ende des Brennrohres 4 an dem Boden des Wärmetauschers 5 umgelenkt. Nach dem Umlenken strömen die Verbrennungsabgase A in einem zwischen einer Außenseite des Brennrohres 4 und einem Innenmantel des Wärmetauschers 5 ausgebildeten Strömungsraum zu einem Abgasauslass 6 ab.

Das zu erwärmende Medium M strömt in einem zwischen dem Innenmantel des Wärmetauschers 5 und einem Außenmantel des Wärmetauschers 5 gebildeten Strömungsraum, wie in Fig. 1 schematisch durch Pfeile dargestellt ist. Das zu erwärmende Medium M strömt dabei bei der Ausführungsform entgegengesetzt zu der Strömungsrichtung der Verbrennungsabgase A in dem Wärmetauscher 5, um eine möglichst gute Wärmeübertragung zu erzielen. Das zu erwärmende Medium M kann dabei insbesondere z.B. durch zu erwärmende Luft oder durch eine zu erwärmende Flüssigkeit, insbesondere die Kühlflüssigkeit in einem Kühlflüssigkeitskreislauf eines Fahrzeugs gebildet sein. Der Innenmantel des Wärmetauschers 5 ist aus einem Material mit hoher Wärmeleitfähigkeit gefertigt, um eine gute Wärmeübertragung von den heißen Verbrennungsabgasen A auf das zu erwärmende Medium M zu gewährleisten.

Im Folgenden wird die Ausgestaltung des Gemischaufbereitungsbereichs 2 bei dem ersten Ausführungsbeispiel eingehender beschrieben.

Der Verdampferbrenner 100 weist eine Brennstoffzuführung 1 zum Zuführen eines flüssigen Brennstoffs auf. Der flüssige Brennstoff kann dabei insbesondere durch einen Kraftstoff gebildet sein, der auch für den Betrieb eines Verbrennungsmotors des Fahrzeugs verwendet wird, insbesondere durch Benzin, Diesel, Ethanol oder Ähnliches. Die Brennstoffzuführung 1 ist in Fig. 1 lediglich schematisch durch eine Brennstoffzufuhrleitung und einen Pfeil dargestellt. Die Brennstoffzuführung 1 kann aber - in an sich bekannter Weise - auch eine Brennstofffördervorrichtung aufweisen, die insbesondere z.B. durch eine Brennstoffdosierpumpe gebildet sein kann. Die Brennstoffzuführung 1 ist dazu ausgebildet, in wohldefinierter Weise Brennstoff zu fördern und zu dosieren.

Die Brennstoffzuführung 1 mündet in dem Gemischaufbereitungsbereich 2. Bei der schematisch dargestellten Ausführungsform mündet die Brennstoffzuführung 1 dabei an einer Rückwand des Gemischaufbereitungsbereichs 2, die den Gemischaufbereitungsbereich 2 rückseitig verschließt. Seitlich ist der Gemischaufbereitungsbereich 2 durch eine Seitenwand 25 begrenzt, die den Verlauf der Hauptkammer 21, des Verjüngungsabschnitts 22 und des Übergangsabschnitts 23 bestimmt.

Es ist ferner eine Brennluftzuführung B vorgesehen, die in Fig. 1 schematisch durch Pfeile dargestellt ist. Die Brennluftzuführung B weist ein (nicht dargestelltes) Brennluftgebläse zum Fördern von Brennluft zu dem Gemischaufbereitungsbereich 2 auf. Der Gemischaufbereitungsbereich 2 weist im Bereich der Hauptkammer 21 eine Mehrzahl von Brennlufteintritten auf, durch die die Brennluft in den Gemischaufbereitungsbereich 2 eintreten kann. Bei dem Ausführungsbeispiel wird die Brennluft mit einem großen Drall, d.h. mit einer großen tangentialen Strömungskomponente in den Gemischaufbereitungsbereich 2 eingeleitet. Der Drall kann der Brennluft dabei z.B. über entsprechend ausgerichtete Leitschaufeln oder Ähnliches aufgeprägt werden. In Fig. 1 ist schematisch ein mit Leitschaufeln versehener Drallkörper 24 dargestellt, über den der zugeführten Brennluft ein starker Drall aufgeprägt wird. Obwohl in Fig. 1 schematisch ein Drallkörper 24 dargestellt ist, bei dem die Brennluft seitlich dem Gemischaufbereitungsbereich 2 zugeführt wird, sind auch andere Anordnungen möglich. Z.B. kann die Brennluft dem Gemischaufbereitungsbereich 2 auch in einem radial außen liegenden Bereich der Rückwand zu dem Gemischaufbereitungsbereich 2 zugeführt werden.

Bei der ersten Ausführungsform ist in dem Gemischaufbereitungsbereich 2 ein Wärmeleitkörper 7 angeordnet, der sich ausgehend von der Rückwand des Gemischaufbereitungsbereichs 2 beabstandet zu der Seitenwand 25 des Gemischaufbereitungsbereichs 2 entlang der Längsachse Z erstreckt. Der Wärmeleitkörper 7 ist bei der ersten Ausführungsform stabförmig und aus einem nicht-porösen Material ausgebildet. Der Wärmeleitkörper 7 ist als ein Axialkörper mit einer im Wesentlichen zylindrischen Form ausgebildet und erstreckt sich durch die Hauptkammer 21, den Verjüngungsabschnitt 22 und den Übergangsabschnitt 23. Bei der in Fig. 1 schematisch dargestellten Realisierung ragt der Wärmeleitkörper 7 auch noch ein kleines Stück in den Umsetzungsbereich 3 hinein. Der Wärmeleitkörper 7 ist im Wesentlichen mittig bezüglich seiner radialen Ausrichtung in dem Gemischaufbereitungsbereich 2 angeordnet. Der Wärmeleitkörper 7 weist eine Außenumfangsoberfläche auf, an der bei der ersten Ausführungsform ein Verdampferkörper 9 aus einem porösen, saugfähigen Material angeordnet ist. Der Verdampferkörper 9 kann dabei insbesondere ein Metallvlies, ein Metallgewebe, einen metallischen oder keramischen Sinterkörper oder Ähnliches aufweisen. Bevorzugt kann der Verdampferkörper 9 den Axialkörper 7 dabei über dessen ganzen Außenumfang umgreifen. Bei der ersten Ausführungsform stellt der Verdampferkörper 9 eine Brennstoffverdampfungsoberfläche 8 bereit, ausgehend von der und aus dessen Volumen heraus der zugeführte flüssige Brennstoff verdampft wird.

Obwohl in Fig. 1 schematisch eine Realisierung dargestellt ist, bei der sich der Verdampferkörper 9 fast über die gesamte axiale Länge des Wärmeleitkörpers 7 erstreckt, ist es z.B. auch möglich, dass sich der Verdampferkörper 9 nur über einen Teilbereich des Wärmeleitkörpers 7 erstreckt. Aufgrund der beschriebenen Ausgestaltung erstreckt sich der Verdampferkörper 9 somit turmförmig in den Gemischaufbereitungsbereich 2. Der Verdampferkörper 9 erstreckt sich dabei ausgehend von der Rückwand des Gemischaufbereitungsbereichs 2 beabstandet zu der Seitenwand 25 des Gemischaufbereitungsbereichs 2 entlang der Längsachse Z. Bei der Ausführungsform hat der Verdampferkörper 9 dabei eine im Wesentlichen hohlzylindrische Form und liegt fest an dem Wärmeleitkörper 7 an.

Der zugeführte flüssige Brennstoff wird an der Rückwand des Gemischaufbereitungsbereichs 2 von der Brennstoffzuführung 1 an den Verdampferkörper 9 übergeben, in dem eine Verteilung des flüssigen Brennstoffs erfolgt. Die Brennstoffzuführung 1 mündet dabei unmittelbar dem Verdampferkörper 9 gegenüberliegend. Aufgrund der porösen, saugfähigen Ausgestaltung des Verdampferkörpers 9 verteilt sich der flüssige Brennstoff dabei sowohl in der Umfangsrichtung des Verdampferkörpers 9 als auch in der axialen Richtung des Verdampferkörpers 9. Ausgehend von der Brennstoffverdampfungsoberfläche 8 des Verdampferkörpers 9 verdampft der zugeführte flüssige Brennstoff und wird in dem Gemischaufbereitungsbereich 2 mit der zugeführten Brennluft vermischt, die entlang der Brennstoffverdampfungsoberfläche strömt. Durch die Zuführung der Brennluft mit einem großen Drall erfolgt dabei bereits eine gute Durchmischung des verdampften Brennstoffs mit Brennluft zu einem Brennstoff-Luft-Gemisch. Die Brennluft umströmt die Brennstoffverdampfungsoberfläche 8 dabei mit einer tangentialen Strömungskomponente. Die Länge L des Verdampferkörpers 9 in der axialen Richtung übersteigt wesentlich die Breite B des Verdampferkörpers 9 in der radialen Richtung senkrecht zu der axialen Richtung. Unter der Breite B ist dabei die maximale Ausdehnung in der radialen Richtung zu verstehen. Insbesondere gilt für das Verhältnis der Länge L zu der Breite B: L/B > 1,5. Bevorzugt gilt L/B > 2.

In dem Verjüngungsabschnitt 22 des Gemischaufbereitungsbereichs 2 erhöht sich aufgrund der Querschnittsverringerung die axiale Strömungsgeschwindigkeitskomponente des Brennstoff-Luft-Gemischs. An dem Übergang von dem Gemischaufbereitungsbereich 2 zu dem Umsetzungsbereich 3 erfolgt aufgrund der abrupten Querschnittserweiterung eine Aufweitung der Drallströmung des Brennstoff-Luft-Gemisches, wodurch sich die axiale Strömungsgeschwindigkeitskomponente verringert und sich in dem Zentrum des Umsetzungsbereichs 3 nahe der Längsachse Z ein axialer Rückströmungsbereich bzw. Rezirkulationsbereich ausbildet, in dem Gase entgegen der Hauptströmungsrichtung H strömen, sodass im Betrieb der Verdampferbrenneranordnung 100 eine Verankerung der Flamme in dem Umsetzungsbereich 3 erfolgt. Bei der Ausführungsform sind der Gemischaufbereitungsbereich 2 und der Umsetzungsbereich 3 somit sowohl räumlich als auch funktional separat ausgebildet.

Die Dimensionen des Verjüngungsabschnitts 22, des Übergangsabschnitts 23 und des Übergangs zu dem Umsetzungsbereich 3 sind so auf die Drallströmung des Brennstoff-Luft-Gemischs abgestimmt, dass ein Rückschlagen der Flamme aus dem Umsetzungsbereich 3 in den Gemischaufbereitungsbereich 2 im normalen Heizbetrieb zuverlässig verhindert ist. Insbesondere wird die Brennluft mit einem ausreichend großen Drall zu dem Gemischaufbereitungsbereich 2 zugeführt, damit diese Bedingung erfüllt ist. Dabei wird sichergestellt, dass die Strömungsgeschwindigkeit in dem Übergangsabschnitt 23 so hoch ist, dass sich dort keine stabile Flamme ausbilden kann. Dies wird insbesondere durch die axiale Anordnung des Wärmeleitkörpers 7 zusätzlich gefördert, da durch dessen mittige Anordnung ein ringförmiger Austrittsspalt für das Brennstoff-Luft-Gemisch gebildet ist.

Der Wärmeleitkörper 7 weist eine hohe thermische Leitfähigkeit auf und ist so ausgebildet, dass im Betrieb der Verdampferbrenneranordnung 100 Wärme von dem in dem Umsetzungsbereich 3 stattfindenden Verbrennungsprozess über Wärmeleitung über den Wärmeleitkörper 7 zu dem Gemischaufbereitungsbereich 2 zurückgeleitet wird, um einen vorteilhaften Verdampfungsprozess des flüssigen Brennstoffs an der Verdampfungsoberfläche 8 zu erzielen.

### ABWANDLUNG

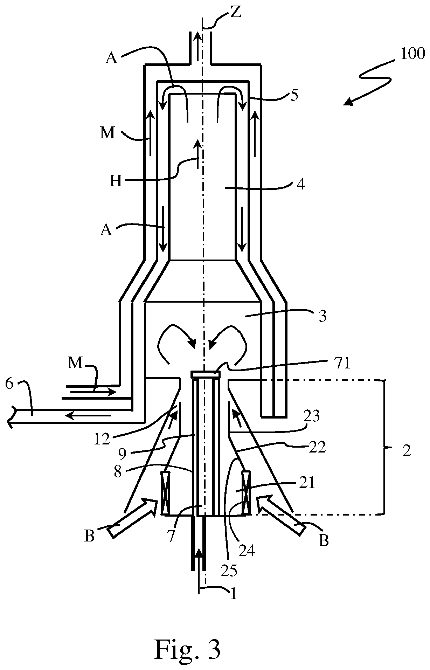

In Fig. 3 ist eine Abwandlung der Verdampferbrenneranordnung von Fig. 1 schematisch dargestellt. Die Abwandlung unterscheidet sich nur darin von der zuvor beschriebenen ersten Ausführungsform, dass der Wärmeleitkörper 7 an seinem dem Umsetzungsbereich 3 zugewandten freien Ende mit einer zusätzlichen Abdeckung 71 versehen ist und dass im Bereich des Übergangsabschnittes 23 eine zusätzliche Stützluftzuführung 12 vorgesehen ist. Da sich die weiteren Komponenten nicht von der zuvor beschriebenen ersten Ausführungsform unterscheiden, werden in Bezug auf die Abwandlung dieselben Bezugszeichen wie bei der ersten Ausführungsform verwendet und zur Vermeidung von Wiederholungen wird nicht der gesamte Aufbau der Verdampferbrenneranordnung 100 erneut beschrieben.

Obwohl bei der im Folgenden beschriebenen Abwandlung sowohl die zusätzliche Abdeckung 71 als auch die zusätzliche Stützluftzuführung 12 realisiert sind, ist es gemäß einer weiteren Abwandlung z.B. auch möglich, nur die Abdeckung 71 oder nur die Stützluftzuführung 12 zusätzlich vorzusehen.

Die Abdeckung 71 ist an dem freien Ende des Wärmeleitkörpers 7 derart angeordnet, dass flüssiger Brennstoff und auch übermäßiger Brennstoffdampf nicht an der Stirnseite des Wärmeleitkörpers 7 in der axialen Richtung austreten kann, sondern gezwungen wird, in der radialen Richtung aus dem Verdampferkörper 9 auszutreten. Wie in Fig. 3 schematisch dargestellt ist, ist an der freien Stirnseite des Wärmeleitkörpers 7 eine Abdeckung 71 vorgesehen, die in der radialen Richtung von dem Außenumfang des restlichen Wärmeleitkörpers 7 hervorsteht und die freie Stirnseite des Verdampferkörpers 9 bedeckt. Die Abdeckung 71 ist aus einem zumindest im Wesentlichen dichten Material gebildet, sodass flüssiger Brennstoff und Brennstoffdampf nicht durch die Abdeckung 71 hindurchtreten können. Bevorzugt kann die Abdeckung 71 aus Metall gebildet sein, insbesondere aus temperaturbeständigem Edelstahl. Die Abdeckung 71 kann z.B. als eine separate Abdeckscheibe ausgebildet sein, die unlösbar oder lösbar an dem stirnseitige Ende des Wärmeleitkörpers 7 befestigt ist. In einer anderen Ausgestaltung ist es z.B. auch möglich, die Abdeckung 71 einstückig mit dem Wärmeleitkörper 7 aus demselben Material herzustellen.

Durch die Abdeckung 71 wird verhindert, dass Brennstoff oder Brennstoffdampf insbesondere vermehrt an dem freien Ende des Wärmeleitkörpers 7 aus dem Verdampferkörper 9 austritt.

In dieser Weise wird erreicht, dass der Brennstoff zumindest im Wesentlichen vollständig zur Ausbildung des Brennstoff-Luft-Gemischs in dem Gemischaufbereitungsbereich 2 zugeführt wird. Somit wird die Gemischaufbereitung in dem Gemischaufbereitungsbereich 2 weiter verbessert. Ferner wird eine negative Beeinflussung der Flammenverankerung in dem Umsetzungsbereich 3 verhindert.

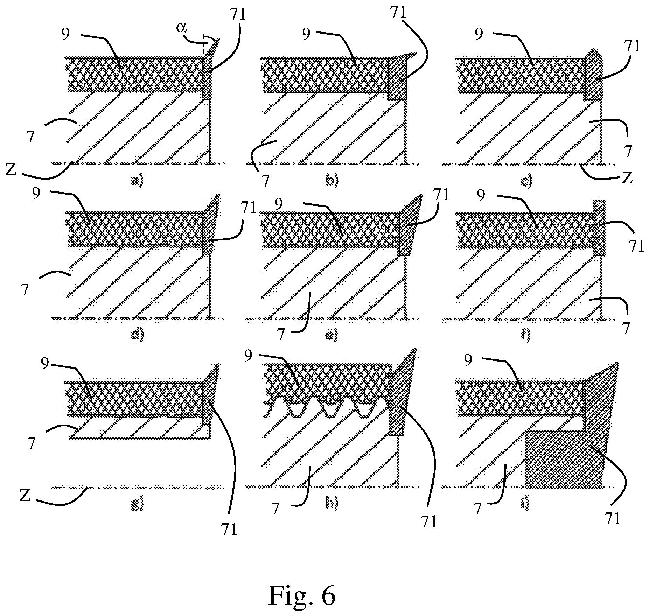

In den Fig. 6 a) bis i) sind verschiedene weitere Abwandlungen der Abdeckung 71 schematisch dargestellt. Auch diese weiteren Abwandlungen der Abdeckung 71 können jeweils sowohl bei einem im Wesentlichen massiven Wärmeleitkörper 7, wie er mit Bezug auf Fig. 1 beschrieben wurde, als auch bei einem Wärmeleitkörper 7 mit einem inneren Hohlraum, wie er in Fig. 6 g) dargestellt ist, vorgesehen werden.

Gemäß den in den Fig. 6 a) bis i) dargestellten weiteren Abwandlungen der Abdeckung 71 steht die Abdeckung 71 in der radialen Richtung jeweils über den Außenumfang des Verdampferkörpers 9 hervor und stellt eine zumindest im Wesentlichen scharfe Abrisskante für die entlang dem Außenumfang des Wärmeleitkörpers 7 und des Verdampferkörpers 9 strömende Strömung bereit. Wie in Fig. 6 a) schematisch dargestellt ist, erstreckt sich der in der radialen Richtung hervorstehende Bereich der Abdeckung 71 unter einem Winkel α zu einer Ebene die senkrecht zu der Längsachse Z verläuft. Der Winkel α kann dabei - je nach der gewünschten Strömungsführung - einen Wert zwischen 0° und 90° aufweisen.

Bei der in Fig. 6 a) schematisch dargestellten Abwandlung erstreckt sich der in der radialen Richtung hervorstehende Bereich der Abdeckung 71 z.B. unter einem Winkel α im Bereich zwischen 35° und 45°, sodass die an dem Außenumfang des Verdampferkörpers 9 strömenden Gase dort relativ stark nach radial außen abgelenkt werden. Ferner ist bei dieser Abwandlung der hervorstehende Bereich als eine sich in der radiale Richtung verjüngende Lippe ausgebildet, die sowohl in der radialen als auch in der axialen Richtung hervorsteht. Der hervorstehende Bereich ist dabei zu dem Rest der Abdeckung 71 leicht in Richtung der Hauptströmungsrichtung H abgewinkelt ausgebildet.

Bei der in Fig. 6 b) schematisch dargestellten Abwandlung erstreckt sich der in der radialen Richtung hervorstehende Bereich der Abdeckung 71 unter einem deutlich größeren Winkel α, der zwischen 160° und 170° beträgt, sodass eine deutlich geringere radiale Ablenkung der an dem Außenumfang des Verdampferkörpers 9 strömenden Gase auftritt.

Bei der in Fig. 6 c) schematisch dargestellten Abwandlung erstreckt sich der in der radialen Richtung hervorstehende Bereich der Abdeckung z.B. unter einem Winkel zwischen ca. 40° und 50°. Ferner ist bei dieser Abwandlung der hervorstehende Bereich der Abdeckung 71 auch auf der von dem Verdampferkörper 9 abgewandten Seite angefast bzw. abgeschrägt, um den Strömungsabriss gezielt zu beeinflussen.

Bei den in den Fig. 6 d) und 6 e) schematisch dargestellten Abwandlungen weist die Abdeckung 71 jeweils insgesamt einen eher keilförmigen Querschnitt auf, sodass der hervorstehende Bereich der Abdeckung 71 - anders als bei den Abwandlungen der Fig. 6 a) und Fig. 6 b) - nicht gegenüber dem Rest der Abdeckung 71 abgewinkelt ausgebildet ist. Wie durch einen Vergleich der Abwandlungen gemäß den Fig. 6 a) und b) und der Abwandlungen gemäß den Fig. 6 d), 6 e) und 6 i) ersichtlich ist, kann der Keilwinkel des radial hervorstehenden Bereichs der Abdeckung 71 in dieser Weise gezielt eingestellt werden.

Bei der in Fig. 6 f) schematisch dargestellten Abwandlung ist die Abdeckung 71 als eine im Wesentlichen ringförmige Scheibe an dem Ende des Wärmeleitkörpers 7 ausgebildet, sodass der hervorstehende Bereich der Abdeckung unter einem Winkel α von ca. 0° seitlich hervorsteht.

Bei der in Fig. 6 g) schematisch dargestellten Abwandlung ist der Wärmeleitkörper 7 mit einem inneren Hohlraum versehen, der in Richtung des Umsetzungsbereiches 3 offen ausgebildet ist. In diesem Fall können z.B. Gase aus dem Umsetzungsbereich 3 in das Innere des Wärmeleitkörpers 7 einströmen. Diese zusätzlichen Merkmale können z.B. auch bei den anderen Abwandlungen vorgesehen werden.

In Fig. 6 h) ist beispielhaft eine Oberflächenstrukturierung des Außenumfangs des Wärmeleitkörpers 7 dargestellt. Eine solche kann auch bei den anderen Darstellungen gemäß den Fig. 6 a) bis g) und i) bevorzugt ebenfalls vorhanden sein. Bei der Abwandlung von Fig. 6 h) liegt die Abdeckung 71 ferner in einem radial innenliegenden Bereich unmittelbar stirnseitig an dem Verdampferkörper 9 an und verläuft unter einem Winkel α von ca. 0°. Ein weiter außen liegender Bereich der Abdeckung 71 verläuft hingegen unter einem größeren Winkel α, sodass wiederum eine radial vorspringende, sich verjüngende Lippe ausgebildet ist. Ferner liegt in einem radial außenliegenden Bereich des Verdampferkörpers 9 die Abdeckung 71 in diesem Fall nicht unmittelbar an dem Verdampferkörper 9 an. Auch diese ergänzenden Merkmale der Abwandlung von Fig. 6 h) können ferner auch bei den anderen Abwandlungen realisiert werden.

Bei der in Fig. 6 i) schematisch dargestellten Abwandlung ist die Abdeckung 71 als ein Einsatz ausgebildet, der mit einem zentralen vorspringenden Zapfen in eine stirnseitige Ausnehmung des Wärmeleitkörpers 7 eingesetzt ist. Auch diese weiteren Merkmale können jeweils auch bei den anderen Abwandlungen realisiert werden.

Die Ausgestaltung der Abdeckung 71 mit der beschriebenen Abrisskante hat den weiteren Vorteil, dass die Strömung an dem Eintritt in den Umsetzungsbereich 3 noch besser stabilisiert wird. Unter anderem kann in dieser Weise die Ausbildung von Pulsationen unterdrückt werden. Ferner kann ein Rückschlagen der Flamme in den Gemischaufbereitungsbereich 2 noch zuverlässiger verhindert werden. Insgesamt kann ferner durch die Abwandlungen der Abdeckung 71 mit der beschriebenen Abrisskante für die Strömung des Brennstoff-Luft-Gemischs insbesondere auch die Ausbildung des Rezirkulationsbereiches in dem Umsetzungsbereich 3 zusätzlich noch weiter stabilisiert werden.

Im Unterschied zu der zuvor beschriebenen ersten Ausführungsform wird bei der Abwandlung die zugeführte Brennluft aufgeteilt, sodass ein Teil der zugeführten Brennluft nicht über den Drallkörper 24 in die Hauptkammer 21 des Gemischaufbereitungsbereichs 2 zugeführt wird, sondern erst weiter stromabwärts bezüglich der Hauptströmungsrichtung H. Die Aufteilung der zugeführten Brennluft kann dabei in konstruktiv einfacher Weise über die Ausgestaltung der Strömungswege für die Brennluft realisiert werden. Wie in Fig. 3 schematisch dargestellt ist, ist bei der Abwandlung eine Stützluftzuführung 12 vorgesehen, über die ein Teil der Brennluft erst in dem Übergangsabschnitt 23 zu dem Gemischaufbereitungsbereich 2 zugeführt wird. Die Ausgestaltung ist dabei derart gewählt, dass der überwiegende Teil der Brennluft über den Drallkörper 24 in die Hauptkammer 21 zugeführt wird und nur ein kleiner Teil der Brennluft, der insbesondere bevorzugt weniger als 10 Prozent der Brennluftmenge betragen kann, über die Stützluftzuführung 12 zugeführt wird. Die Stützluftzuführung 12 ist in dem Bereich angeordnet, in dem der Gemischaufbereitungsbereich 2 in den Umsetzungsbereich 3 übergeht. Die Stützluftzuführung 12 ermöglicht eine zusätzliche Stabilisierung der Strömungsverhältnisse in der Verdampferbrenneranordnung 100.

Die Stützluftzuführung 12 bewirkt eine zusätzliche Beschleunigung des in den Umsetzungsbereich 3 strömenden Brennstoff-Luft-Gemischs und stellt sicher, dass die Aufbereitung des Gemischs auch im Fall von unerwünschten Schwankungen und Sekundäreffekten stabil bleibt. Bei der konkret dargestellten Ausgestaltung bewirkt die Stützluftzuführung 12 ferner, dass die Hauptströmung des Brennstoff-Luft-Gemischs in dem Übergangsabschnitt 23 entlang dem Wärmeleitkörper 7 verläuft, und verhindert somit ein zu frühes Ablösen der Strömung von dem Wärmeleitkörper 7. In dieser Weise wird bei der Abwandlung ein Rückschlagen oder Rückbrennen einer Flamme aus dem Umsetzungsbereich 3 in den Gemischaufbereitungsbereich 2 noch zuverlässiger verhindert.

Da in dieser Weise die Strömungsverhältnisse zusätzlich stabilisiert werden, wird ferner eine gleichmäßigere Temperaturverteilung in dem Gemischaufbereitungsbereich 2 erreicht, die sich positiv auf die Belastung und Lebensdauer der Bauteile auswirkt.

Obwohl in Fig. 3 beispielhaft eine sehr einfache konstruktive Ausgestaltung der Stützluftzuführung 12 dargestellt ist, sind verschiedene geometrische Ausgestaltungen möglich. Insbesondere kann die geometrische Ausgestaltung in einfacher Weise verändert werden, um die gewünschten Strömungsverhältnisse und den gewünschten Anteil der durch die Stützluftzuführung 12 zugeführten Brennluft einzustellen.

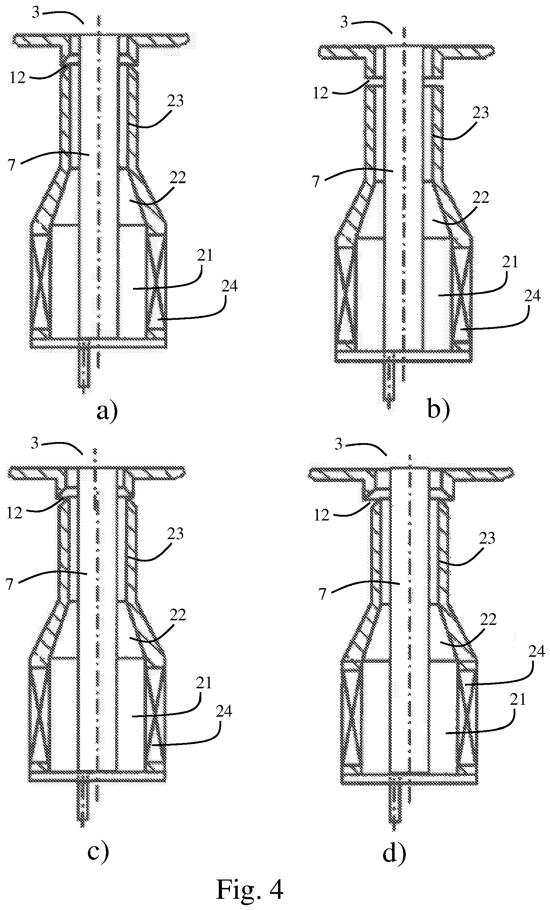

In den Fig. 4 a) bis d) sind verschiedene mögliche Ausgestaltungen der Stützluftzuführung 12 schematisch dargestellt. In der schematischen Darstellung der Fig. 4 a) bis d) ist an dem Außenumfang des Wärmeleitkörpers 7 kein Verdampferkörper 9 dargestellt, es ist aber wie bei der zuvor beschriebenen ersten Ausführungsform jeweils möglich, dass ein Verdampferkörper 9 an dem Außenumfang des Wärmeleitkörpers 7 angeordnet ist. Ferner ist in den Fig. 4 a) bis d) lediglich ein Ausschnitt der Verdampferbrenneranordnung 100 in dem Bereich des Gemischaufbereitungsbereichs 2 dargestellt.

Die verschiedenen Ausgestaltungen der Stützluftzuführung 12 in den Fig. 4 a) bis d) unterscheiden sich in der konkreten Ausgestaltung der Austrittsöffnungen für die Stützluft. Während in Fig. 4 a) eine Realisierung gezeigt ist, bei der die Stützluft im Wesentlichen rotationssymmetrisch sowohl in radialer als auch in axialer Richtung zugeführt wird, ist in Fig. 4 b) eine Realisierung gezeigt, bei der die Stützluft im Wesentlichen in der radialen Richtung zugeführt wird. Es ist zu beachten, dass die Stützluft gegebenenfalls jeweils zusätzlich auch noch eine tangentiale Strömungskomponente aufweisen kann. Die Austrittsöffnungen für die Stützluft können z.B. als ein durchgehender Schlitz oder eine Mehrzahl von Durchbrechungen in der Wandung des Übergangsabschnittes 23 ausgebildet sein. Wie in Fig. 4 c) schematisch dargestellt ist, kann z.B. der an den Umsetzungsbereich 3 angrenzende Bereich des Übergangsabschnittes 23 auch leicht versetzt gegenüber dem Rest des Übergangsabschnittes 23 angeordnet sein, um eine exzentrische Zuführung der Stützluft zu realisieren. Ferner ist es z.B. auch möglich, dass der an den Umsetzungsbereich 3 angrenzende Bereich des Übergangsabschnittes 23 einen etwas größeren Durchmesser aufweist, um die Strömungsführung gezielt zu beeinflussen, wie es z.B. in Fig. 4 d) schematisch dargestellt ist. Ferner ist es z.B. auch möglich, die Stützluftzuführung nicht rotationssymmetrisch sondern gezielt asymmetrisch auszubilden, um die Strömungsführung zusätzlich zu modulieren, wodurch eine weitere Stabilisierung der Umsetzung in dem Umsetzungsbereich 3 und eine Unterdrückung von Schwingungen ermöglicht werden.

### ZWEITE AUSFÜHRUNGSFORM

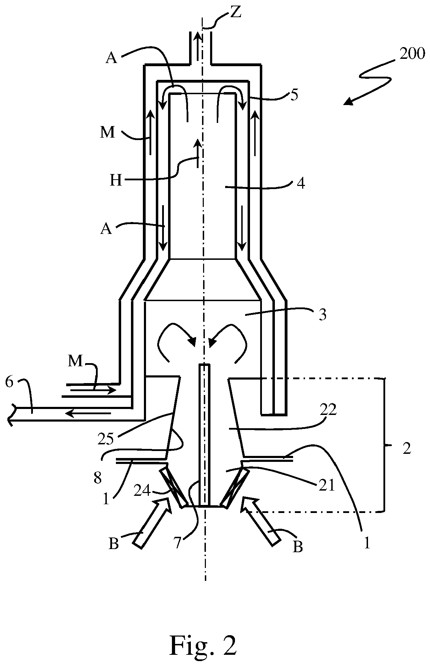

Im Folgenden wird eine zweite Ausführungsform einer Verdampferbrenneranordnung unter Bezug auf Fig. 2 beschrieben.

Auch die Verdampferbrenneranordnung 200 gemäß der zweiten Ausführungsform ist für ein mobiles, mit flüssigem Brennstoff betriebenes Heizgerät ausgebildet. Die Verdampferbrenneranordnung 200 ist dabei wiederum speziell für ein Fahrzeugheizgerät ausgelegt, insbesondere für eine Standheizung oder Zusatzheizung eines Kraftfahrzeugs.

Die Verdampferbrenneranordnung 200 gemäß der zweiten Ausführungsform unterscheidet sich im Wesentlichen nur in der Ausgestaltung des Gemischaufbereitungsbereichs 2 von der zuvor beschriebenen Ausführungsform, sodass zur Bezeichnung entsprechender Komponenten dieselben Bezugszeichen verwendet werden und zur Vermeidung unnötiger Wiederholungen auf eine erneute Beschreibung der unveränderten Komponenten verzichtet wird.

Auch bei der zweiten Ausführungsform weist der Gemischaufbereitungsbereich 2 eine Hauptkammer 21 und einen sich in Strömungsrichtung an diesen anschließenden Verjüngungsabschnitt 22, der sich in Richtung zu dem Umsetzungsbereich 3 zunehmend verjüngt, auf. Im Gegensatz zu der zuvor beschriebenen Ausführungsform ist allerdings zwischen dem Verjüngungsabschnitt 22 und dem Umsetzungsbereich 3 kein weiterer Übergangsabschnitt ausgebildet. Gemäß einer Abwandlung ist es aber möglich, wie bei der ersten Ausführungsform einen Übergangsabschnitt vorzusehen. Wie bei der ersten Ausführungsform ist an dem Übergang von dem Gemischaufbereitungsbereich 2 zu dem Umsetzungsbereich 3 eine abrupte Querschnittserweiterung ausgebildet, sodass sich der für die strömenden Gase zur Verfügung stehende Strömungsquerschnitt abrupt aufweitet.

Bei der zweiten Ausführungsform ist eine Brennluftzuführung B mit einem Drallkörper 24 vorgesehen, über die Brennluft mit einem starken Drall dem Gemischaufbereitungsbereich 2 zugeführt werden kann. Die Brennluft wird dabei wie bei der ersten Ausführungsform seitlich in den Gemischaufbereitungsbereich 2 eingeleitet. Es ist jedoch auch bei der zweiten Ausführungsform gemäß einer Abwandlung möglich, die Brennluft z.B. in einem radial außenliegenden Bereich der Rückwand des Gemischaufbereitungsbereichs 2 zuzuführen.

Auch bei der zweiten Ausführungsform ist ein Wärmeleitkörper 7 in dem Gemischaufbereitungsbereich 2 beabstandet zu der Seitenwand 25 des Gemischaufbereitungsbereichs 2 angeordnet und erstreckt sich durch den Verjüngungsabschnitt 22 bis in den Umsetzungsbereich 3, um gezielt Wärme von dem Umsetzungsprozess in dem Umsetzungsbereich 3 über Wärmeleitung zu dem Gemischaufbereitungsbereich 2 zurückzuführen. Sämtliche Erläuterungen zu dem Wärmeleitkörper 7 inklusive bezüglich den möglichen Abwandlungen und Ausgestaltungen, die in Hinblick auf die erste Ausführungsform gegeben wurden, sind auch auf den Wärmeleitkörper 7 bei der zweiten Ausführungsform anwendbar.

Im Unterschied zu der ersten Ausführungsform ist bei der zweiten Ausführungsform aber kein Verdampferkörper aus einem porösen Material an der Außenumfangsfläche des Wärmeleitkörpers 7 vorgesehen, sondern die Brennstoffverdampfungsoberfläche 8 ist durch die Seitenwand 25 des Gemischaufbereitungsbereichs 2 in dem Verjüngungsabschnitt 22 gebildet. Die Brennstoffzuführung 1 mündet bei dem konkret dargestellten Ausführungsbeispiel an dem die Brennstoffverdampfungsoberfläche 8 bereitstellenden Bereich der Seitenwand 25. Die Mündung der Brennstoffzuführung 1 befindet sich dabei an einem bezüglich der Hauptströmungsrichtung H stromaufwärtigen Ende der Brennstoffverdampfungsoberfläche 8.

Wie bei der ersten Ausführungsform ist auch bei der Verdampferbrenneranordnung 200 gemäß der zweiten Ausführungsform die Seitenwand 25 des Gemischaufbereitungsbereichs 2 thermisch gegenüber dem Umsetzungsbereich 3 isoliert, sodass eine Wärmerückführung über Wärmeleitung zu dem Gemischaufbereitungsbereich 2 hauptsächlich über den Wärmeleitkörper 7 erfolgt, der auch bei der zweiten Ausführungsform als ein Axialkörper ausgebildet ist.

Im Betrieb der Verdampferbrenneranordnung 200 wird der zugeführte flüssige Brennstoff durch die mit einem starken Drall zugeführte Brennluft an der die Brennstoffverdampfungsoberfläche 8 bereitstellenden Seitenwand 25 verteilt. Da die Brennstoffverdampfungsoberfläche 8 an dem Verjüngungsabschnitt 22 ausgebildet ist, ist dabei sichergestellt, dass der dabei ausgebildete Brennstofffilm zuverlässig an der Seitenwand 25 anliegt. Über den Wärmeleitkörper 7 wird Wärme aus dem Umsetzungsbereich 3 über Wärmeleitung in den Gemischaufbereitungsbereich 2 zurückgeführt. Dabei erwärmt sich der in dem Gemischaufbereitungsbereich 2 befindliche Teil des Wärmeleitkörpers 7 und es wird Wärme über Wärmestrahlung an den Brennstofffilm übertragen, der an der dem Wärmeleitkörper 7 gegenüberliegenden Seitenwand 25 ausgebildet ist. Die thermisch gegenüber dem Umsetzungsbereich 3 isolierte Seitenwand 25 bleibt dabei gleichzeitig auf einem relativ niedrigen Temperaturniveau, sodass die Verdampfung des Brennstoffs in einer Weise erfolgt, bei der eine äußerst geringe Neigung zur Bildung von Ablagerungen gegeben ist.

Bei der Verdampfung erfolgt eine gute Durchmischung des verdampfenden Brennstoffs mit der unter einem starken Drall zugeführten Brennluft zu einem Brennstoff-Luft-Gemisch, das bereits sehr homogen durchgemischt in den Umsetzungsbereich 3 eintritt. Aufgrund der Ausgestaltung des Gemischaufbereitungsbereichs 2 mit dem Verjüngungsabschnitt 22 und dem sich entlang der Längsachse Z erstreckenden Wärmeleitkörper 7 sind die Strömungsgeschwindigkeiten des Brennstoff-Luft-Gemischs in dem ringförmigen Strömungsraum, der zwischen der Seitenwand 25 des Gemischaufbereitungsbereichs 2 und dem Wärmeleitkörper 7 ausgebildet ist, so hoch, dass ein Zurückschlagen einer Flamme aus dem Umsetzungsbereich 3 in den Gemischaufbereitungsbereich 2 zuverlässig verhindert werden kann. Ferner bildet sich durch die starke Aufweitung bei dem Eintritt in den Umsetzungsbereich 3 in Verbindung mit dem starken Drall des Brennstoff-Luft-Gemischs in dem Umsetzungsbereich 3 an der Längsachse ein Rezirkulationsbereich aus, wie es bereits im Hinblick auf die erste Ausführungsform beschrieben wurde.

Obwohl bei der zweiten Ausführungsform beschrieben wurde, dass die Brennstoffzuführung 1 unmittelbar an der Seitenwand 25 des Gemischaufbereitungsbereichs 2 mündet, ist es z.B. auch möglich, den Brennstoff an der Rückwand des Gemischaufbereitungsbereichs 2 zuzuführen und durch die mit dem starken Drall zugeführte Brennluft an der Brennstoffverdampfungsoberfläche 8 zu verteilen.

Obwohl in Bezug auf die zweite Ausführungsform keine zusätzliche Stützluftzuführung gezeigt ist, wie sie in Bezug auf die Abwandlung der ersten Ausführungsform beschrieben wurde, ist es z.B. auch möglich, bei einer der zweiten Ausführungsform entsprechenden Ausgestaltung eine solche zusätzliche Stützluftzuführung vorzusehen.

### WEITERBILDUNGEN

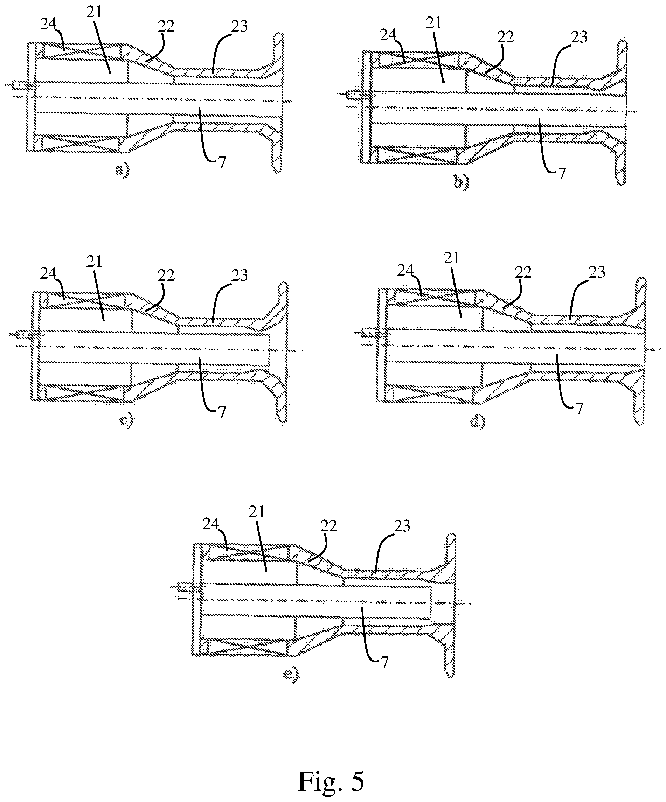

In den Fig. 5 a) bis e) sind verschiedene Weiterbildungen des Übergangsabschnittes 23 des Gemischaufbereitungsbereichs 2 dargestellt, die sowohl bei der ersten Ausführungsform und deren Abwandlungen als auch bei der zweiten Ausführungsform vorgesehen werden können.

In den schematischen Darstellungen der Fig. 5 a) bis e) ist an dem Außenumfang des Wärmeleitkörpers 7 wiederum kein Verdampferkörper 9 dargestellt, es ist aber wie bei der zuvor beschriebenen ersten Ausführungsform jeweils möglich, dass ein Verdampferkörper 9 an dem Außenumfang des Wärmeleitkörpers 7 angeordnet ist. Ferner kann in diesem Fall auch eine zusätzliche Abdeckung 71 vorgesehen sein, wie es mit Bezug auf die Abwandlung der ersten Ausführungsform beschrieben wurde. Ferner ist in den Fig. 5 a) bis e) wieder lediglich ein Ausschnitt der Verdampferbrenneranordnung 100 in dem Bereich des Gemischaufbereitungsbereichs 2 dargestellt und die Darstellung ist um 90 Grad verdreht zu den vorhergehenden Darstellungen.

Die in den Fig. 5 a) bis e) schematisch dargestellten Weiterbildungen des Übergangsabschnittes 23 ermöglichen nochmals eine Verbesserung und Stabilisierung der Strömungsverhältnisse. Insbesondere kann durch diese Veränderung der Kontur an dem Übergang zu dem Umsetzungsbereich 3 noch zuverlässiger verhindert werden, dass die Flamme aus dem Umsetzungsbereich 3 in den Gemischaufbereitungsbereich 2 zurückschlägt.

Gemäß einer in Fig. 5 a) schematisch dargestellten ersten Ausgestaltung kann der unmittelbar an den Umsetzungsbereich 3 angrenzende Bereich des Übergangsabschnittes 23, d.h. der am weitesten stromabwärts gelegene Bereich des Übergangsabschnittes 23, sich leicht aufweitend ausgebildet sein, insbesondere z.B. konisch aufweitend, um ein verbessertes Abströmprofil zu erreichen. Gemäß einer in Fig. 5b) schematisch dargestellten Ausgestaltung verjüngt sich der Innenquerschnitt des Übergangsabschnittes 23 zunächst, bevor er sich in dem unmittelbar an den Umsetzungsbereich 3 angrenzenden Bereich ebenfalls wieder aufweitet. In diesem Fall wird die Strömungsgeschwindigkeit durch die Verjüngung nochmals erhöht, sodass ein Rückbrennen bzw. Rückschlagen der Flamme noch zuverlässiger verhindert ist. Bei der in Fig. 5c) dargestellten Ausgestaltung weitet sich der unmittelbar an den Umsetzungsbereich 3 angrenzende Bereich des Übergangsabschnittes 23 in zwei Stufen auf, insbesondere z.B. jeweils konisch mit in Strömungsrichtung zunächst einem kleineren Kegelwinkel und anschließend einem größeren Kegelwinkel.

Bei der in Fig. 5 d) dargestellten weiteren Weiterbildung verjüngt sich der Innenquerschnitt des Übergangsabschnittes 23 in dem unmittelbar an den Umsetzungsbereich 3 angrenzenden Bereich, um die Strömungsgeschwindigkeit zu erhöhen, wobei z.B. eine konische Verjüngung realisiert sein kann. Bei der in Fig. 5 e) schematisch dargestellten Ausgestaltung weist der Übergangsabschnitt 23 anschließend an einen sich verjüngenden Bereich unmittelbar angrenzend an den Umsetzungsbereich 3 ferner noch einen Auslauf mit konstantem Querschnitt auf.

Bei den in den Fig. 5 c) und Fig. 5 e) dargestellten Weiterbildungen ist der Wärmeleitkörper 7 jeweils etwas verkürzt ausgebildet, sodass er sich nicht über die gesamte Länge des Gemischaufbereitungsbereiches 2 erstreckt, sondern in Bezug auf die Hauptströmungsrichtung H bereits kurz vor dem Ende des Gemischaufbereitungsbereiches 2 endet. Der Wärmeleitkörper 7 ist somit bei diesen Weiterbildungen etwas in den Auslauf des Gemischaufbereitungsbereiches 2 zurückgezogen ausgebildet.

Die verschiedenen beschriebenen geometrischen Ausgestaltungen können auch noch miteinander kombiniert werden, um die gewünschten Strömungsverhältnisse je nach der Dimensionierung der anderen Bereiche einzustellen.

## Patentansprüche

1. Verdampferbrenneranordnung (100; 200) für ein mobiles, mit flüssigem Brennstoff betriebenes Heizgerät, mit:
einem Gemischaufbereitungsbereich (2) zum Erzeugen eines Brennstoff-Luft-Gemischs,
einer in dem Gemischaufbereitungsbereich (2) angeordneten Brennstoffverdampfungsoberfläche (8) zum Verdampfen des flüssigen Brennstoffs,
einer Brennluftzuführung (B) zum Zuführen von Brennluft zu dem Gemischaufbereitungsbereich (2),
einer Brennstoffzuführung (1) zum Zuführen von flüssigem Brennstoff zu der Brennstoffverdampfungsoberfläche (8),
einem dem Gemischaufbereitungsbereich (2) strömungstechnisch nachgeordneten, räumlich getrennt von dem Gemischaufbereitungsbereich ausgebildeten Umsetzungsbereich (3) zum Umsetzen des Brennstoff-Luft-Gemischs unter Freisetzung von Wärme, **dadurch gekennzeichnet, dass** der Gemischaufbereitungsbereich (2) und der Umsetzungsbereich (3) in einer axialen Richtung bezüglich einer Längsachse (Z) der Verdampferbrenneranordnung hintereinander angeordnet sind und der Gemischaufbereitungsbereich (2) einen sich in Richtung des Umsetzungsbereichs (3) verjüngenden Verjüngungsabschnitt (22) aufweist und an einem Übergang von dem Gemischaufbereitungsbereich (2) zu dem Umsetzungsbereich (3) eine abrupte Querschnittserweiterung ausgebildet ist, und
einem sich beabstandet von einer Seitenwand (25) des Gemischaufbereitungsbereichs (2) durch den Gemischaufbereitungsbereich (2) zu dem Umsetzungsbereich (3) erstreckenden Wärmeleitkörper (7) zum Rückführen von Wärme aus dem Umsetzungsbereich (3) zu dem Gemischaufbereitungsbereich (2) über Wärmeleitung.

2. Verdampferbrenneranordnung nach Anspruch 1, wobei sich der Wärmeleitkörper (7) stabförmig entlang einer Längsachse (Z) des Gemischaufbereitungsbereichs (2) erstreckt.

3. Verdampferbrenneranordnung nach einem der vorangehenden Ansprüche, wobei die Brennluftzuführung (B) einen Drallkörper (24) aufweist, mit dem der zugeführten Brennluft eine Drallströmung aufgeprägt wird.

4. Verdampferbrenneranordnung nach einem der vorangehenden Ansprüche, wobei eine Seitenwand (25) des Gemischaufbereitungsbereichs (2) gegenüber dem Umsetzungsbereich (3) wärmeisoliert ist.

5. Verdampferbrenneranordnung nach einem der vorangehenden Ansprüche, wobei die Brennstoffverdampfungsoberfläche (8) durch eine freiliegende Seitenwand (25) des Gemischaufbereitungsbereichs (2) gebildet ist.

6. Verdampferbrenneranordnung nach Anspruch 5, wobei die Brennstoffverdampfungsoberfläche (8) durch die freiliegende Seitenwand (25) im Bereich des Verjüngungsabschnitts (22) gebildet ist.

7. Verdampferbrenneranordnung nach einem der Ansprüche 1 bis 4, wobei die Brennstoffverdampfungsoberfläche (8) durch einen Verdampferkörper (9) aus einem saugfähigen, porösen Material gebildet ist.

8. Verdampferbrenneranordnung nach Anspruch 7, wobei der Verdampferkörper (9) an einer Außenumfangsfläche des Wärmeleitkörpers (7) angeordnet ist.

9. Verdampferbrenneranordnung nach Anspruch 7 oder 8, wobei an einem dem Umsetzungsbereich (3) zugewandten Ende des Verdampferkörpers (9) eine Abdeckung (71) vorgesehen ist.

10. Verdampferbrenneranordnung nach einem der vorangehenden Ansprüche, wobei eine Stützluftzuführung (12) vorgesehen ist, zum Zuführen eines Teils der Brennluft in einem Übergangsabschnitt (23), über den der Gemischaufbereitungsbereich (2) in den Umsetzungsbereich (3) übergeht.

11. Verdampferbrenneranordnung nach einem der vorangehenden Ansprüche, wobei ein Übergangsabschnitt (23), über den der Gemischaufbereitungsbereich (2) in den Umsetzungsbereich (3) übergeht, mit einer Querschnittsvariation zur Verbesserung des Abströmprofils versehen ist.

12. Verdampferbrenneranordnung nach einem der vorangehenden Ansprüche, wobei sich der Wärmeleitkörper (7) bis in den Umsetzungsbereich (3) erstreckt.

13. Mobiles, mit flüssigem Brennstoff betriebenes Heizgerät mit einer Verdampferbrenneranordnung (100; 200) nach einem der vorangehenden Ansprüche.

14. Mobiles, mit flüssigem Brennstoff betriebenes Heizgerät nach Anspruch 13, das als Fahrzeugheizgerät für eine Standheizung oder Zusatzheizung ausgebildet ist.

## Claims

1. An evaporator burner arrangement (100; 200) for a mobile heater operated with liquid fuel, having:
a mixture preparation region (2) for generating a fuel- air-mixture,
a fuel evaporation surface (8) arranged in the mixture preparation region (2) for evaporating the liquid fuel,
a combustion air supply (B) for supplying combustion air to the mixture preparation region (2),
a fuel supply (1) for supplying liquid fuel to the fuel evaporation surface (8),
a conversion region (3) being arranged fluidically downstream of the mixture preparation region (2) and formed spatially separated from the mixture preparation region for converting the fuel-air-mixture in order to release heat,
**characterized in that** the mixture preparation region (2) and the conversion region (3) are arranged one behind the other in an axial direction with respect to a longitudinal axis (Z) of the evaporator burner arrangement and the mixture preparation region (2) has a tapering portion (22) tapering in the direction towards the conversion region (3) and an abrupt widening of the cross-section is formed at a transition from the mixture preparation region (2) to the conversion region (3), and
a heat conductor body (7) extending spaced from a sidewall (25) of the mixture preparation region (2) through the mixture preparation region (2) to the conversion region (3) for feeding-back heat from the conversion region (3) to the mixture preparation region (2) by thermal conductance.

2. The evaporator burner arrangement according to claim 1, wherein the heat conductor body (7) extends rod-shaped along a longitudinal axis (Z) of the mixture preparation region (2).

3. The evaporator burner arrangement according to any one of the preceding claims, wherein the combustion air supply (B) comprises a swirl body (24) with which a swirl flow is impressed onto the supplied combustion air.

4. The evaporator burner arrangement according to any one of the preceding claims, wherein a sidewall (25) of the mixture preparation region (2) is thermally insulated with regard to the conversion region (3).

5. The evaporator burner arrangement according to any one of the preceding claims, wherein the fuel evaporation surface (8) is formed by an exposed sidewall (25) of the mixture preparation region (2).

6. The evaporator burner arrangement according to claim 5, wherein the fuel evaporation surface (8) is formed by the exposed sidewall (25) in the region of the tapering portion (22).

7. The evaporator burner arrangement according to any one of claims 1 to 4, wherein the fuel evaporation surface (8) is formed by an evaporator body (9) from an absorbent, porous material.

8. The evaporator burner arrangement according to claim 7, wherein the evaporator body (9) is arranged at an outer circumferential surface of the heat conductor body (7).

9. The evaporator burner arrangement according to claim 7 or 8, wherein a cover (71) is provided at an end of the evaporator body (9) facing the conversion region (3).

10. The evaporator burner arrangement according to any one of the preceding claims, wherein a support air supply (12) is provided for supplying a portion of the combustion air in a transition portion (23) via which the mixture preparation region (2) transitions into the conversion region (3).

11. The evaporator burner arrangement according to any one of the preceding claims, wherein a transition portion (23) via which the mixture preparation region (2) transitions into the conversion region (3) is provided with a variation in cross-section for improving the flow-off profile.

12. The evaporator burner arrangement according to any one of the preceding claims, wherein the heat conductor body (7) extends into the conversion region (3).

13. Mobile heater operated with liquid fuel having an evaporator burner arrangement (100; 200) according to any one of the preceding claims.

14. Mobile heater operated with liquid fuel according to claim 13 which is formed as a vehicle heater for a parking heater or supplementary heater.

## Revendications

1. Agencement de brûleur à évaporateur (100 ; 200) pour un appareil de chauffage mobile fonctionnant avec du combustible liquide, comprenant :
une zone de préparation de mélange (2) pour produire un mélange de combustible et d'air,
une surface d'évaporation de combustible (8) disposée dans la zone de préparation de mélange (2), pour évaporer le combustible liquide,
une alimentation en air comburant (B) pour acheminer de l'air comburant à la région de préparation de mélange (2),
une alimentation en combustible (1) pour acheminer du combustible liquide à la surface d'évaporation de combustible (8),
une zone de réaction (3) disposée, du point de vue fluidique, en aval de la zone de préparation de mélange (2), séparée spatialement de la zone de préparation de mélange, pour faire réagir le mélange de combustible et d'air en libérant de la chaleur, **caractérisé en ce que**
la zone de préparation de mélange (2) et la zone de réaction (3) sont disposées l'une derrière l'autre dans une direction axiale par rapport à un axe longitudinal (Z) de l'agencement de brûleur à évaporateur et la zone de préparation de mélange (2) présente une portion de rétrécissement (22) se rétrécissant dans la direction de la zone de réaction (3) et un élargissement de section transversale abrupte est réalisé au niveau d'une transition entre la zone de préparation de mélange (2) et la zone de réaction (3), et
comprenant un corps thermoconducteur (7) s'étendant à distance d'une paroi latérale (25) de la zone de préparation de mélange (2) à travers la zone de préparation de mélange (2) jusqu'à la zone de réaction (3), pour recirculer la chaleur provenant de la zone de réaction (3) jusqu'à la zone de préparation de mélange (2) par conduction thermique.

2. Agencement de brûleur à évaporateur selon la revendication 1, dans lequel le corps thermoconducteur (7) s'étend en forme de barre le long d'un axe longitudinal (Z) de la zone de préparation de mélange (2).

3. Agencement de brûleur à évaporateur selon l'une quelconque des revendications précédentes, dans lequel l'alimentation en air comburant (B) présente un corps de tourbillonnement (24) avec lequel l'air comburant acheminé est sollicité avec un écoulement tourbillonnaire.

4. Agencement de brûleur à évaporateur selon l'une quelconque des revendications précédentes, dans lequel une paroi latérale (25) de la région de préparation de mélange (2) est isolée thermiquement par rapport à la région de réaction (3) .

5. Agencement de brûleur à évaporateur selon l'une quelconque des revendications précédentes, dans lequel la surface d'évaporation de combustible (8) est formée par une paroi latérale exposée (25) de la région de préparation de mélange (2).

6. Agencement de brûleur à évaporateur selon la revendication 5, dans lequel la surface d'évaporation de combustible (8) est formée par la paroi latérale exposée (25) dans la région de la portion de rétrécissement (22).

7. Agencement de brûleur à évaporateur selon l'une quelconque des revendications 1 à 4, dans lequel la surface d'évaporation de combustible (8) est formée par un corps d'évaporateur (9) en matériau poreux capable d'aspiration.

8. Agencement de brûleur à évaporateur selon la revendication 7, dans lequel le corps d'évaporateur (9) est disposé sur une surface périphérique extérieure du corps thermoconducteur (7) .

9. Agencement de brûleur à évaporateur selon la revendication 7 ou 8, dans lequel un recouvrement (71) est prévu au niveau d'une extrémité du corps d'évaporateur (9) tournée vers la région de réaction (3).

10. Agencement de brûleur à évaporateur selon l'une quelconque des revendications précédentes, dans lequel une alimentation en air d'appoint (12) est prévue, pour acheminer une partie de l'air comburant dans une portion de transition (23) par le biais de laquelle la région de préparation de mélange (2) se prolonge dans la région de réaction (3) .

11. Agencement de brûleur à évaporateur selon l'une quelconque des revendications précédentes, dans lequel une portion de transition (23) par le biais de laquelle la région de préparation de mélange (2) se prolonge dans la région de réaction (3), est pourvue d'une variation de section transversale pour améliorer le profil d'écoulement.

12. Agencement de brûleur à évaporateur selon l'une quelconque des revendications précédentes, dans lequel le corps thermoconducteur (7) s'étend jusque dans la région de réaction (3).

13. Appareil de chauffage mobile fonctionnant avec du combustible liquide comprenant un agencement de brûleur à évaporateur (100 ; 200) selon l'une quelconque des revendications précédentes.

14. Appareil de chauffage mobile fonctionnant avec du combustible liquide selon la revendication 13, qui est réalisé sous forme d'appareil de chauffage de véhicule pour un chauffage auxiliaire ou un chauffage d'appoint.
